Europäisches Patentamt

European Patent Office

Office européen des brevets

(19)

(11) EP 0 711 651 A2

(12) **EUROPEAN PATENT APPLICATION**

(43) Date of publication:
15.05.1996 Bulletin 1996/20

(51) Int Cl.$^6$: **B29D 17/00**, B29C 43/00

(21) Application number: 95308050.4

(22) Date of filing: 10.11.1995

(84) Designated Contracting States:
DE FR GB IT

(30) Priority: 11.11.1994 JP 301591/94

(71) Applicant: **CANON KABUSHIKI KAISHA**
**Tokyo (JP)**

(72) Inventors:
• **Nagano, Kazumi, c/o Canon K.K.**
**Tokyo (JP)**

• **Imataki, Hiroyuki, c/o Canon K.K.**
**Tokyo (JP)**

(74) Representative:
**Beresford, Keith Denis Lewis et al**
**BERESFORD & Co.**
**2-5 Warwick Court**
**High Holborn**
**London WC1R 5DJ (GB)**

(54) **Process and apparatus for producing a substrate sheet for an information recording medium, and an information recording medium using the same**

(57) A process for producing a substrate sheet for an information recording medium having a preformat on the surface of the substrate sheet comprises the steps of: providing a roll stamper (2) having a pattern corresponding to the preformat on the surface of the roll stamper; providing a roll (1) disposed opposingly to the roll stamper; providing a means for defining a gap between the roll stamper and the roll; melt-extruding a resin to form a molten substrate sheet (4) having a predetermined width; and introducing the molten resin sheet into the gap to transfer the preformat pattern to the molten resin sheet, wherein a pair of grooves are provided around the surface of the roll stamper and/or the roll, the molten resin sheet is introduced so that the edges of the molten resin sheet are introduced between each of the grooves and the surface of the roll or roll stamper which is disposed opposite to the roll or roll stamper of which the grooves are provided. An apparatus for producing the substrate sheet comprises the roll stamper, the roll and the means for defining a gap between the roll stamper and the roll, and means (5,6) for the extruding step. An information recording medium comprises a substrate and a recording layer on the substrate, wherein the substrate is formed by the process.

FIG. 1

**Description**

BACKGROUND OF THE INVENTION

Field of the Invention

This invention relates to a process for producing a substrate sheet for an information recording medium, an apparatus for use in the production of the substrate sheet, and an information recording medium using the substrate sheet.

Related Background Art

On an optical recording medium such as optical disks and optical cards, information is recorded and reproduced with a semiconductor laser beam in a diameter of from 0.6 to 3 $\mu$m.

Generally for securing the reliability of recording and reproduction, pregrooves and track addresses are formed in a fine pattern on the surface of the substrate for an optical recording medium by means of a stamper.

For forming preformat patterns of fine pits and projections on the substrate sheet surface by means of a stamper, known methods include injection molding, compression molding, and embossing. The known methods also include transfer of a preformat pattern onto an extruded molten resin sheet by pressing the molten resin sheet between a roll stamper and a mirror-finished roll. This transfer method is excellent in productivity.

The substrate sheet for information-recording mediums, especially for optical recording mediums has preferably the both faces strictly parallel to each other for precise recording and reproduction.

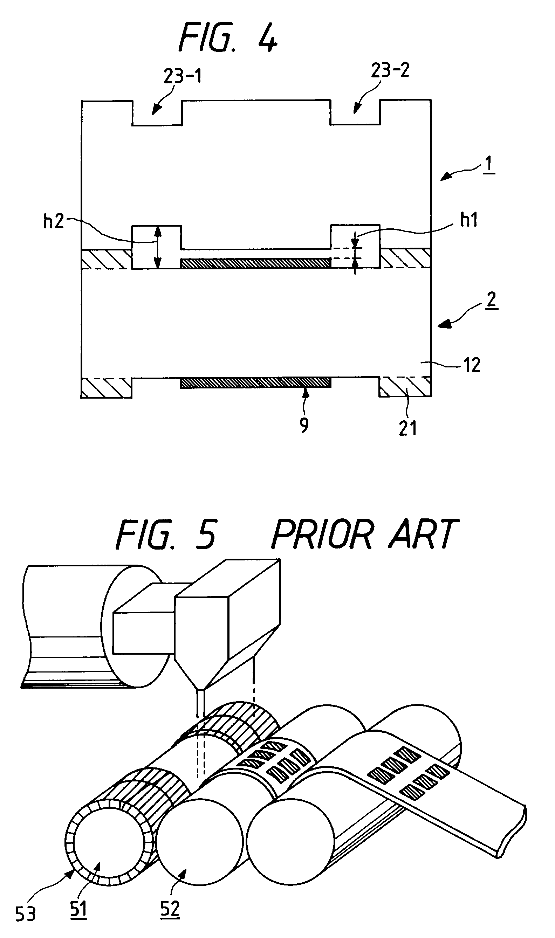

To meet this requirement in forming the substrate sheet by means of the aforementioned roll stamper, the inventors of the present invention disclosed, in Japanese Patent Laid-Open Application No. 5-296833, a molding apparatus for producing a substrate sheet for an information recording medium as shown in Fig. 5. The disclosed apparatus is provided with a gap-defining means 53 between a roll stamper 52 and a mirror-finished roll 51, the gap-controlling means being in contact with both the roll stamper and the mirror-finished roll to control the gap between the roll stamper and the mirror-finished roll. However, the substrate sheet formed with this apparatus is not always stable in birefringence at the both edge portions of the sheet.

When a preformat is formed in proximity to the edge of the substrate sheet for raising production efficiency, the preformat near the edge can be adversely affected by the birefringence at the edge portions. Therefore, the birefringence of the edge portions of the substrate sheet is required to be further stabilized.

SUMMARY OF THE INVENTION

In view of the above problems, an object of the present invention is to provide a process which can produce a high quality substrate sheet for an information recording medium.

Another object of the present invention is to provide an apparatus for providing a high quality substrate sheet for an information recording medium.

Still another object of the present invention is to provide a high quality information recording medium.

According to a first aspect of the present invention, there is provided a process for producing a substrate sheet for an information recording medium having a preformat on the surface of the substrate sheet comprising the steps of: providing a roll stamper having a pattern corresponding to the preformat on the surface of the roll stamper; providing a roll disposed opposingly to the roll stamper; providing a means for defining a gap between the roll stamper and the roll, disposed between the roll stamper and the roll so as to be in contact with the roll stamper and the roll; melt-extruding a resin to form a molten substrate sheet having a predetermined width; and introducing the molten resin sheet into the gap to transfer the preformat pattern to the molten resin sheet, wherein a pair of grooves are provided at least one of around the surface of the roll stamper and around the surface of the roll, the molten resin sheet is introduced so that the edges of the molten resin sheet are introduced between each of the grooves and the surface of the roll or roll stamper which is disposed opposite to the roll or roll stamper of which the grooves are provided.

According to a second aspect of the present invention, there is provided an apparatus for producing a substrate sheet for an information recording medium having a preformat on the surface of the substrate sheet comprising: a roll stamper having a pattern corresponding to the preformat on the surface of the roll stamper; a roll disposed opposingly to the roll stamper; and means for defining a gap between the roll stamper and the roll, disposed between the roll stamper and the roll so as to be in contact with the roll stamper and the roll; and means for extruding a resin to form a molten resin sheet having a predetermined width, disposed so that the molten resin sheet is introduced into the gap, wherein a pair of grooves are provided at least around the surface of the roll stamper and around the surface of the roll, so that the edges of the molten resin sheet are introduced between each of the grooves and the surface of the roll or roll stamper which is disposed opposite to the roll or roll stamper of which the grooves are provided.

According to a third aspect of the present invention, there is provided an information recording medium comprising a substrate and a recording layer on the substrate, wherein the substrate is formed by the process comprising the steps of: providing a roll stamper having a pattern corresponding to the preformat on the surface of the roll stamper; providing a roll disposed opposingly to the roll stamper; providing a means for defining a gap between the roll stamper and the roll, disposed between the roll stamper and the roll so as to be in contact with the roll stamper and the roll; melt-extruding a resin to form a molten substrate sheet having a predetermined width; and introducing the molten resin sheet into the gap to transfer the preformat pattern to the molten resin sheet, wherein a pair of grooves are provided at least one of around the surface of the roll stamper and around the surface of the roll, the molten resin sheet is introduced so that the edges of the molten resin sheet are introduced between each of the grooves and the surface of the roll or roll stamper which is disposed opposite to the roll or roll stamper of which the grooves are provided.

The inventors have found that fluctuation of the edge thickness of the molten resin sheet due to fluctuation of the conditions for extruding the molten resin sheet is responsible for the birefringence of the edge of the substrate sheet.

That is to say, in case that the edges is thicker than the gap, an excessive compressing force is applied to the edges of the molten resin sheet when the molten sheet is introduced into the gap, and this excessive compressing force may cause the larger birefringence of the edges of the substrate sheet.

In addition, in the prior art described above, there is an example in which the molten resin sheet is pressed with the roll and the roll stamper of which a flexible stamper whose width is smaller than that of the molten resin sheet, is fixed around a roll substrate. However, this is not effective to improve stability of the birefringence at the edges of the substrate sheet for the optical recording media.

A number of embodiments of the present invention will now be described, by way of example only, with reference to the accompanying figures in which:

Fig. 1 illustrates an embodiment of the apparatus for producing a substrate sheet for an information-recording medium of the present invention.

Fig. 2A is a sectional view of the apparatus in Fig. 1 taken on line 2A-2A.

Fig. 2B is a schematic sectional view of the apparatus in Fig. 1 taken on line 2A-2A with an extruded resin sheet introduced therein.

Fig. 3 is a schematic sectional view of a roll and a roll stamper for substrate sheet for an information-recording medium of another embodiment of the present invention.

Fig. 4 is a schematic sectional view of a roll and a roll stamper for substrate sheet for an information-recording medium of still another embodiment of the present invention.

Fig. 5 is a schematic perspective view of a conventional apparatus for molding a substrate sheet for an optical recording medium.

Figs. 6A and 6B are schematic drawings for explaining a cooling means for cooling the edge portions of the resin sheet.

## DESCRIPTION OF THE PREFERRED EMBODIMENTS

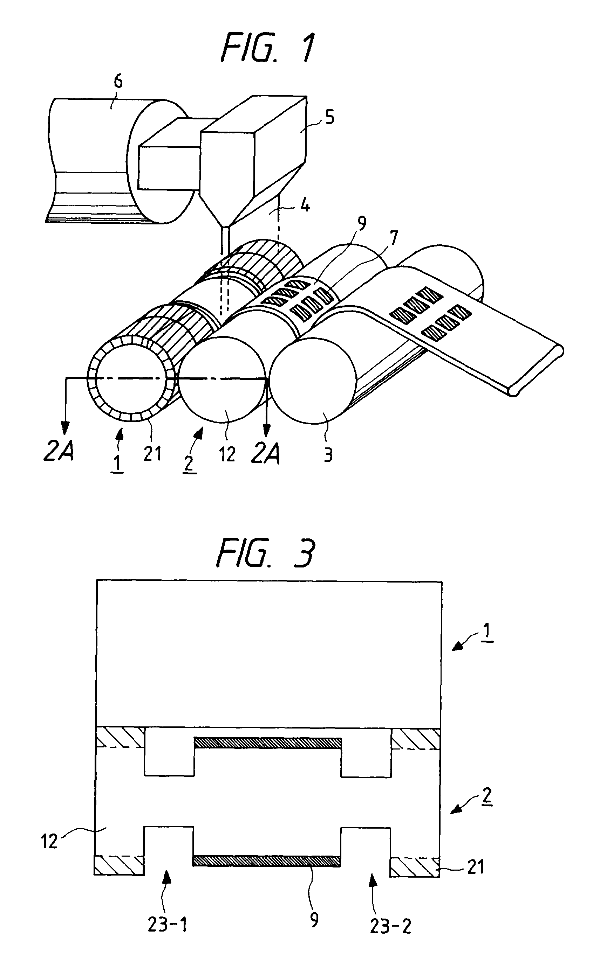

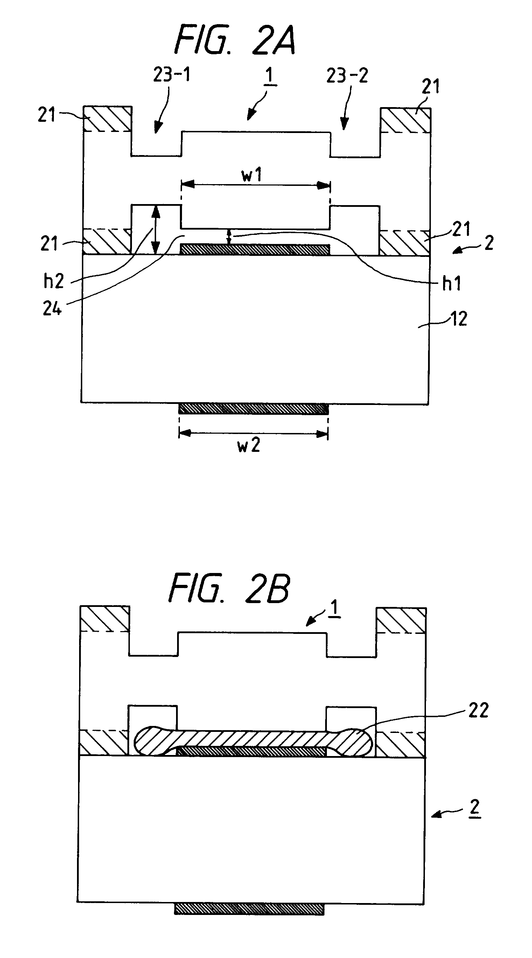

Fig. 1 illustrates schematically an embodiment of the apparatus for producing a substrate sheet for an information-recording medium (hereinafter referred to as a "recording medium substrate sheet") of the present invention. Figs. 2A and 2B are sectional views of a pair of sheet-forming rolls of the present invention.

The apparatus for producing a recording medium substrate sheet of an embodiment of the present invention shown in Fig. 1 comprises an extruder 6 provided with a hopper for preheating pellets of a thermoplastic resin, a T-die 5 for molding a molten resin extruded from the extruder 6 into a molten resin sheet, a roll 1, a roll stamper 2 opposing to the roll 1 and having a flexible stamper 9 fixed on the peripheral surface thereof for pressing the extruded molten resin with the roll 1, and a role 3 for cooling the resin sheet opposing to the roll stamper 2. The molten resin sheet 4 is pressed between the roll 1 and the roll stamper 2 to transfer a preformat pattern 7 on the peripheral face of the roll stamper to the molten resin sheet 4.

In Figs. 2A and 2B, the flexible stamper is fixed on the peripheral surface of the roll substrate 12 constituting the roll stamper.

A gap-defining means 21 defines size of the gap 24 between the peripheral surface of the roll 1 and the preformat surface on the roll stamper. The gap-defining means is integrated with the roll 1 opposing the roll stamper 2, and is formed by machining the roll 1.

Grooves 23-1 and 23-2 are formed on the roll 1 to receive edge portions of the molten resin sheet.

These grooves are formed in such a depth that the edge portions of the molten resin sheet do not come to be compressed even at its maximum thickness. The recording medium substrate sheet is formed with the edge portions of the molten resin sheet being led into the grooves. Therefore, the edge portions are not pressed even if the thickness of the edge portions 22 as shown in Fig. 2B varies. Thus a high-quality substrate sheet for optical recording can be stably produced with less or no formation of the higher birefringent edge portions.

In this embodiment, the depth of the grooves 23-1, 23-2 depends on the thickness of the substrate sheet to be produced. In forming a recording medium substrate sheet of not thicker than 1 mm, for example, a 0.4 mm-thick optical card substrate sheet, the depth (h2), namely the distance between the bottom of the groove to the surface of an opposing roll or a roll stamper, is 2 to 3.5 times, more preferably 2 to 3 times the size (h1) of the gap 24.

In formation of an optical recording medium substrate sheet of thicker than 1 mm, for example, a 1.2-mm thick optical disk substrate sheet, the depth (h2), namely the distance between the bottom of the groove to the surface of an opposing roll or a roll stamper, is 1.3 to 2 times, more preferably 1.3 to 1.8 times the dimension (h1) of the gap 24.

The gap 24 between the roll 1 and the roll stamper 2, which is defined by the gap defining means, depends on the thickness of the substrate sheet to be produced, and the size (h1) of the gap 24 may preferably be decided taking into account shrinkage of the molten resin in cooling solidification, and compressibility of the molten resin sheet with the stamper roll.

In the case where a preformat pattern is formed not directly onto the surface of the roll but onto a flexible stamper fixed around the surface of the roll, the size (h1) is decided depending on the distance from the surface of the flexible stamper.

In order to avoid compression of the edge portions of the molten resin sheet between the roll 1 and the roll stamper 2, the distance (W1) between the grooves is designed to be not more than 2L/3 of the width (L) of the lip, namely the extrusion part of the die 5. Thereby, the edge portions of the molten resin sheet is not pressed and abnormal birefringence is prevented even if the conditions of molding the molten resin sheet vary within the range of forming acceptable optical recording medium substrate by pressing between the roll 1 and the roll stamper 2.

When the width (L) of the die lip is not less than 300 mm, the distance (W1) between the grooves may preferably be (L-100) or less.

The width (M) of the groove is preferably designed such that the edge portion of the molten resin sheet is not compressed by the roll 1 and the roll stamper 2, thus, the width may preferably be (L/6)+10 or larger.

In this embodiment, the distance (W1) between the grooves is preferably not less than the width (W2) of the flexible stamper 9 on the peripheral face of the roll stamper in order to form an optical recording medium substrate sheet by pressing the molten resin sheet 4 with the flexible stamper 9 and a portion between the grooves of roll 1. In other words, the die lip width (L), the groove distance (W1), and the flexible stamper width (W2) preferably satisfies the relations below:

$$2L/3 \geq W1 \geq W2 \text{ (for } L < 300 \text{ mm)}$$
$$L-100 \geq W1 \geq W2 \text{ (for } L \geq 300 \text{ mm)}$$

Fig. 3 is a schematic sectional view of a combination of a roll 1 and a roll stamper 2 for explaining another embodiment of the present invention. In Fig. 3, grooves for edge portions of a molten resin sheet is formed on a roll substrate 12 constituting a roll stamper 2.

The width and the depth of the respective grooves 23-1, 23-2 are preferably designed in the same manner as in the embodiment shown in Fig. 2.

The distance (W1) between the grooves, the width (W2) of the flexible stamper 9, and the width (L) of the lip is preferably decided similarly as in the embodiment shown in Fig. 2 to satisfy the relations below:

$$2L/3 \geq W1 \geq W2 \text{ (for } L < 300 \text{ mm)}$$
$$L-100 \geq W1 \geq W2 \text{ (for } L \geq 300 \text{ mm)}$$

Fig. 4 is a schematic sectional view of a combination of a roll 1 and a roll stamper 2 for explaining still another embodiment of the present invention. In Fig. 4, a gap-defining means 21 is provided on a roll substrate 12, and grooves 23-1, 23-2 are provided on a roll 1. In this constitution also, width and depth of the respective grooves, width of the stamper, width of the lip are designed similarly as in the above embodiments.

In the respective embodiments of the present invention, the grooves 23-1, 23-2 are formed on the role 1 and/or the role base 12 generally by machining the surface of the roll or the roll substrate by means of a precision lathe or a like machine tool. Since the surface of the roll affects greatly the surface roughness of the formed substrate sheets, the surface is preferably machined with necessary machining precision; for example, 0.2 μm or more precise, more preferably 0.1 μm or more precise. The reverse face of the flexible stamper, which also affects the surface roughness of the substrate sheet, is preferably machined with the above-mentioned plane precision.

In all of the above embodiments, the roll stamper 2 has the flexible stamper 9 fixed on the peripheral face of the roll substrate 12. However, the constitution of the roll stamper 2 is not limited thereto, and for example, a preformat pattern is carved directly on the peripheral surface of the roll substrate 12 of the roll stamper 2, where the preformat pattern is formed in an area between the groove 23-1 and the groove 23-2.

As described above, grooves are formed on a roll 1 or a roll stamper 2. The roll 1 and the roll stamper 2 are mounted on a substrate sheet-forming apparatus as shown in Fig. 1. A molten resin sheet 4 melt-extruded from a die is introduced into the gap between the roll 1 and the roll stamper 2 with the edge portions of the molten resin sheet being led into the grooves, thereby a sheet being formed by controlling the resin extrusion rate and the speed of take-off of the resin sheet in an intended sheet thickness. The substrate for an optical recording medium produced in such a manner is of high quality and is less liable to cause birefringence at the edge portions.

The substrate sheet-forming apparatus of the present invention is preferably provided with a cooling means such as an air-blowing device and a cooling roll to accelerate cooling of the edge portions of the substrate sheet immediately after separation of the molten resin sheet from the roll stamper 2.

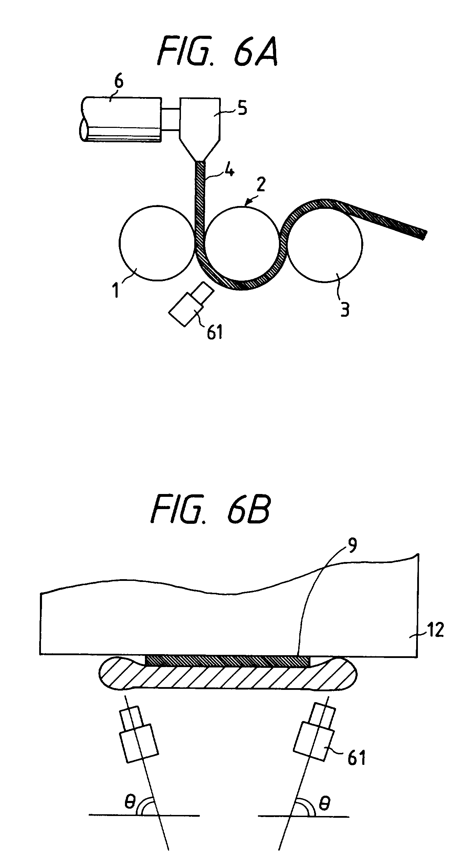

In particular, a non-contact cooling means such as an air-blowing device is preferred since it is less liable to cause stress in the substrate sheet. An example of the cooling means is a fluid-pressing means 61 shown in Fig. 6A.

When such a fluid-pressing means is employed, the minimum pressure of the fluid blown from the fluid-pressing means depends on the viscosity and thickness of the resin sheet. For an acrylic resin sheet or a polycarbonate resin sheet of thickness of from about 0.3 to about 1.4 mm, the pressure may preferably range from 5 to 50 g/cm$^2$, more preferably from 10 to 20 g/cm$^2$.

The fluid-pressing means 61 may be any device which is capable of forming a gas curtain on the surface of edge portions of the molten resin sheet. The examples include an air-knife, and an air-pressure zone which is constructed from an air-permeable or gas-permeable porous material. The fluid-pressing means 61 is preferably placed directly under the nip between the roll 1 and the roll stamper 2.

A fluid-pressing means of a type which directs the gas flow to resin sheet edge portions through a relatively small slot or opening is capable of changing the direction of gas blowing to edge portions of a resin sheet. The blowing angle θ relative to the resin sheet edge portions as shown in Fig. 6B is selected preferably to be slightly less than 90°, for example in the range of from about 45° to 80°, which reduces the amount of the gas turning aside toward a format pattern transfer portion to prevent undesirable premature cooling of the preformat pattern transfer portion of the resin sheet.

The fluid-pressing means 61 may be constructed to be capable of controlling the temperature of the fluid therefrom. In addition, in case of providing means for measuring a surface temperature of the edge portion and a central portion of the substrate sheet which is passed through the gap but is not separated from the surface of the roll stamper, and controlling the temperature of the fluid by using feedback from the temperature measuring means, the temperature control of the edge portions of the substrate sheet can be carried out more precisely.

As described above, according the embodiments of the present invention, the birefringence at the edge portions can be kept at a low level independently of variation of resin extrusion rate and irregularity of resin flow in an extruder T-die, whereby preformat transfer region adjacent to the edge portion of a substrate sheet can be made useful for a substrate for an optical recording medium.

Consequently, preformat patterns can be arranged fully in the width direction of the stamper to improve substrate formation efficiency.

The present invention is described below in more detail by reference to Examples.

Example 1

A roll 1 and a roll stamper 2 as shown in Fig. 2 were prepared for production of an optical card substrate sheet of 0.4 mm thick through the steps below.

A roll substrate for the roll 1 employed was a stainless steel cylinder having a chromium-plated and mirror-finished peripheral surface, having a surface roughness of not more than 0.1 μm, and having a diameter of 300 mm and a roll surface length of 500 mm. The roll substrate material was machined to form a groove of 75 mm wide and 0.6 mm deep at the respective portions ranging from 50 mm to 125 mm measured from the both ends of the roll substrate.

Then, four stainless belts of 25 mm wide, 942.4 mm long, and 0.6 mm thick were fastened by screws around the respective ends of the roll, two belts on each ends, as the gap-defining means 21, with the belt joint portions being displaced from each other to obtain the roll 1.

Another roll substrate for the roll stamper 2 was a stainless steel cylinder having a chromium-plated and mirror-finished peripheral face, having surface roughness of not more than 0.1 μm, and having a diameter of 300 mm and a roll face length of 500 mm. On the roll substrate, fixing grooves of 10 mm deep were formed on the peripheral face of this roll substrate for inserting fixing members for a stamper mentioned below.

The stamper employed was 250 mm wide, 900 mm long, and 0.2 mm thick, and was made of nickel. On the surface of this stamper, four preformat patterns for an optical card were formed. The preformat pattern corresponds to preformat for an optical card having track grooves of 3 μm wide and 85 mm long at a pitch of 12 μm in stripes.

On the reverse surface of the both end portions in length direction of the stamper, fixing members made of stainless steel of 10 mm thick, 15 mm wide, and 400 mm long were fusion-bonded with overlapping width of 5 mm by means of an electron beam fusion bonding apparatus (trade name: EBW6LB, Mitsubishi Electric Corporation).

Then the stamper was fixed to the roll substrate 12 by inserting the fixing members into the fixing grooves and applying tension to the stamper with wedges.

The roll 1 and the roll stamper 2 were mounted to the sheet-forming apparatus shown in Fig. 1. The pressing force of the roll 1 to the roll stamper was controlled to 120 kgf. A molten resin sheet was formed by the apparatus with the roll substrate 12 controlled to contact with the roll 1 by interposition of the gap-defining means 21.

The sheet-forming apparatus had a die of a lip width of 375 mm, and an extruder of a diameter of 35 mm. Air was blown at a pressure of 17 g/cm$^2$ from an air knife placed directly under the nip at the angle of θ=50° as shown in Fig. 6.

In the sheet-forming apparatus, the size (h1) of the gap 24 was 0.4 mm, the thickness of the stamper was 0.2 mm, and the total thickness (h2) of the groove portions (23-1, 23-2) was 1.2 mm.

A resin, bisphenol A type polycarbonate (trade name: PANLITE L-1250, Teijin Kasei K.K.) was formed into a sheet continuously for 24 hours under the conditions of a die temperature of 350°C, an extrusion rate of 11 kg/h, and a take-up rate of 1.5 m/min.

In the central part of 250 mm wide of the obtained optical card substrate sheet, the preformat pattern transfer was satisfactory, and the sheet was of high quality with the thickness of 0.4 mm ± 3 μm, and birefringence of not higher than 8 nm at a single pass. In the edge portion of the sheet, although the thickness was highly non-uniform, the birefringence varied little during the sheet formation, and was kept at 10 nm or lower. No adverse effect was caused by the variation of the birefringence of the edge portions in the middle portion of the sheet in extrusion direction, namely in the pattern transfer region. No adjustment of the sheet-forming conditions was necessary during 24 hours of sheet formation.

Example 2

A roll 1 and a roll stamper 2 as shown in Fig. 3 were prepared for production of an optical card substrate sheet of 0.4 mm thick through the steps below.

A roll substrate for the roll stamper 2 employed was a stainless steel cylinder having a chromium-plated and mirror-finished peripheral surface, having a surface roughness of not more than 0.1 μm, and having a diameter of 500 mm and a width of 850 mm. The roll substrate was machined to form a groove of 150 mm wide and 0.4 mm deep at the respective portions ranging from 50 mm to 200 mm measured from the both ends of the roll substrate.

On the roll substrate, fixing grooves of 10 mm deep were formed on the peripheral face of this roll substrate for inserting fixing members for a stamper mentioned below.

The stamper employed was 550 mm wide, 1570 mm long, and 0.2 mm thick, and was made of nickel. On the surface of this stamper, 70 preformat patterns for an optical card as those in Example 1 were formed.

On the reverse face of the both end portions in length direction of the stamper, fixing members made of stainless steel of 10 mm thick, 15 mm wide, and 550 mm long were fusion-bonded with overlapping width of 5 mm by means of an electron beam fusion-bonding apparatus (trade name: EBW6LB, Mitsubishi Electric Corporation).

Then the stamper was fixed to the roll substrate 12 by inserting the fixing members into the fixing grooves and applying tension to the stamper with wedges.

Then, four stainless belts of 25 mm wide, 1570 mm long, and 0.6 mm thick were fastened by screws around the respective ends of the roll, two belts on each ends, as the gap-defining means 21, with the belt joint portions being displaced from each other to obtain the roll 1.

The roll 1 and the roll stamper 2 were mounted to the producing apparatus shown in Fig. 1. The pressing force of the roll 1 to the roll stamper was controlled to 120 kgf. A molten resin sheet was formed by the apparatus with the roll substrate 12 controlled to contact with the roll 1 by interposition of the gap-defining means 21.

Air was blown at a pressure of 20 g/cm$^2$ from an air knife placed directly under the nip point at the angle of θ=45° as shown in Fig. 6.

The sheet-forming apparatus had a die of a lip width of 700 mm, and an extruder of a diameter of 35 mm.

In the sheet-forming apparatus, the size (h1) of the gap 24 was 0.4 mm, the thickness of the stamper was 0.2 mm, and the total thickness (h2) of the groove portions (23-1, 23-2) was 1.2 mm.

A resin, bisphenol A type polycarbonate (trade name: PANLITE L-1250, Teijin Kasei K.K.) was formed into a sheet continuously for 24 hours under the conditions of the die temperature of 350°C, extrusion rate of 11 kg/h, and take-up rate of 1.5 m/min.

In the center portion of 250 mm wide of the obtained optical card substrate sheet, the preformat pattern transfer was satisfactory, and the sheet was of high quality with the thickness of 0.4 mm ± 3 μm, and birefringence of not higher than 10 nm at a single pass. In the edge portion of the sheet, although the thickness was highly non-uniform, the birefringence varied little during the sheet formation, and was kept at 10 nm or lower. No adverse effect was caused by the variation of the birefringence of the edge portions in the central part of the sheet in extrusion direction, namely in the pattern transfer region. No adjustment of the sheet-forming conditions was necessary during 24 hours of sheet formation.

Comparative Example 1

An optical card substrate sheet was formed continuously for 24 hours in the same manner as in Example 1 except that the grooves 23-1, 23-1 were not formed on the roll 1.

Consequently, in the central part of the obtained optical card substrate sheet, that is, the preformat-formed region, an accuracy in the preformat pattern transfer was satisfactory, and the birefringence was not higher than 8 nm. However, in the edge portion of the substrate sheet, the birefringence was not stable and reached about 50 nm at the highest in some portions. In the preformat transfer regions adjacent to the highly birefringent portions, the birefringence reached about 20 nm, and such regions were useless for the optical card substrate sheet.

**Claims**

1. A process for producing a substrate sheet for an information recording medium having a preformat on the surface of the substrate sheet comprising the steps of:

   providing a roll stamper having a pattern corresponding to the preformat on the surface of the roll stamper;
   providing a roll disposed opposingly to the roll stamper;
   providing a means for defining a gap between the roll stamper and the roll, disposed between the roll stamper and the roll so as to be in contact with the roll stamper and the roll;

melt-extruding a resin to form a molten substrate sheet having a predetermined width; and introducing the molten resin sheet into the gap to transfer the preformat pattern to the molten resin sheet, wherein a pair of grooves are provided at least one of around the surface of the roll stamper and around the surface of the roll, the molten resin sheet is introduced so that the edges of the molten resin sheet are introduced between each of the grooves and the surface of the roll or roll stamper which is disposed opposite to the roll or roll stamper of which the grooves are provided.

2. The process according to Claim 1, wherein the thickness of the edge of the molten resin sheet is preserved when the molten resin sheet is passed through the gap.

3. The process according to Claim 1, wherein the distance $(h2)$ between the bottom of the groove and the surface of the roll or the roll stamper satisfies Equation (1) or (2):

$$2(h1) \leq (h2) \leq 3.5(h1) \qquad (1)$$
$$1.3(h1) \leq (h2) \leq 2(h1) \qquad (2)$$

where $(h1)$ is dimension of the gap, Equation (1) is applied to the substrate having a thickness of not more than 1 mm, and Equation (2) is applied to the substrate having a thickness of more than 1 mm.

4. The process according to Claim 2, wherein the distance $(h2)$ between the bottom of the groove and the surface of the roll or the roll stamper satisfies Equation (3) or (4):

$$2(h1) \leq (h2) \leq 3(h1) \qquad (3)$$
$$1.3(h1) \leq (h2) \leq 1.8(h1) \qquad (4)$$

where $(h1)$ is dimension of the gap, Equation (3) is applied to the substrate having thickness of not more than 1 mm, and Equation (4) is applied to the substrate having thickness of more than 1 mm.

5. The process according to Claim 1, wherein the distance $(W1)$ between the grooves, width $(W2)$ of the stamper, and width $(1)$ of the lip of the die satisfy Equation (5) or (6):

$$2L/3 \geq W1 \geq W2 \qquad (5)$$
$$L-100 \geq W1 \geq W2 \qquad (6)$$

where Equation (5) is applied for $L < 300$ mm, and Equation (6) is applied for $L \geq 300$ mm.

6. The process according to Claim 1, wherein the resin is a polycarbonate resin.

7. The process according to Claim 1, wherein a width $(M)$ of the groove satisfies Equation (7):

$$M \geq \{(L/6) + 10\} \qquad (7)$$

8. An apparatus for producing a substrate sheet for an information recording medium having a preformat on the surface of the substrate sheet comprising:

a roll stamper having a pattern corresponding to the preformat on the surface of the roll stamper;
a roll disposed opposingly to the roll stamper; and means for defining a gap between the roll stamper and the roll, disposed between the roll stamper and the roll so as to be in contact with the roll stamper and the roll; and
means for extruding a resin to form a molten resin sheet having a predetermined width, disposed so that the molten resin sheet is introduced into the gap, wherein a pair of grooves are provided at least around the surface of the roll stamper and around the surface of the roll, so that the edges of the molten resin sheet are introduced between each of the grooves and the surface of the roll or roll stamper which is disposed opposite to the roll or roll stamper of which the grooves are provided..

9. The apparatus according to Claim 8, wherein the groove has a predetermined depth so that the thickness of the edge of the molten resin sheet is preserved when the central part of the molten resin sheet is pressed with the roll and the roll stamper.

10. The apparatus according to Claim 8, wherein the distance $(h2)$ between the bottom of the groove and the surface of the roll or the roll stamper satisfies Equation (1) or (2):

$$2(h1) \leq (h2) \leq 3.5(h1) \qquad (1)$$
$$1.3(h1) \leq (h2) \leq 2(h1) \qquad (2)$$

where $(h1)$ is dimension of the gap, Equation (1) is applied to the substrate having thickness of not more than 1 mm, and Equation (2) is applied to the substrate having thickness of more than 1 mm.

11. The apparatus according to Claim 10, wherein the distance $(h2)$ between the bottom of the groove and the surface of the roll or the roll stamper satisfies Equation (3) or (4):

$$2(h1) \leq (h2) \leq 3(h1) \qquad (3)$$
$$1.3(h1) \leq (h2) \leq 1.8(h1) \qquad (4)$$

where $(h1)$ is dimension of the gap, Equation (3) is applied to the substrate having thickness of not more than 1 mm, and Equation (4) is applied to the substrate having thickness of more than 1 mm.

12. The apparatus according to Claim 8, wherein width $(W1)$ of the groove, width $(W2)$ of the stamper, and width $(L)$ of the lip of the die satisfy Equation (5) or (6):

$$2L/3 \geq W1 \geq W2 \qquad (5)$$

$$L\text{-}100 \geq W1 \geq W2 \qquad (6)$$

where Equation (5) is applied for L < 300 mm, and Equation (6) is applied for L $\geq$ 300 mm.

13. The apparatus according to Claim 8, wherein the width (M) of the groove satisfies Equation (7):

$$M \geq \{(L/6) + 10\} \qquad (7)$$

14. An information recording medium comprising a substrate and a recording layer on the substrate, wherein the substrate is formed by the process comprising the steps of:

   providing a roll stamper having a pattern corresponding to the preformat on the surface of the roll stamper;
   providing a roll disposed opposingly to the roll stamper;
   providing a means for defining a gap between the roll stamper and the roll, disposed between the roll stamper and the roll so as to be in contact with the roll stamper and the roll;
   melt-extruding a resin to form a molten substrate sheet having a predetermined width; and introducing the molten resin sheet into the gap to transfer the preformat pattern to the molten resin sheet, wherein a pair of grooves are provided at least one of around the surface of the roll stamper and around the surface of the roll, the molten resin sheet is introduced so that the edges of the molten resin sheet are introduced between each of the grooves and the surface of the roll or roll stamper which is disposed opposite to the roll or roll stamper of which the grooves are provided.

15. A process of producing an information recording medium, prerecorded or otherwise, that includes producing a substrate sheet for preformat of the same by any method as claimed in claims 1 to 7.

16. A process as claimed in claim 15 or as claimed in any of claims 1 to 7 which includes transferring preformat patterns at least one of which is at a location which is adjacent to one of said grooves at the edge of said resin sheet.

## FIG. 1

## FIG. 3

## FIG. 2A

## FIG. 2B

## FIG. 4

## FIG. 5    PRIOR ART

## FIG. 6A

## FIG. 6B